# EUROPEAN PATENT SPECIFICATION

(11) **EP 3 336 939 B1**
(45) Date of publication and mention of the grant of the patent: **27.11.2019**
(21) Application number: 16834631.0
(22) Date of filing: 08.08.2016
(51) Int. Cl.: H01M 4/505, C01G 53/00, H01M 4/131, H01M 4/36, H01M 4/48, H01M 4/525, H01M 4/62, H01M 4/02, H01M 10/0525

(54) **POSITIVE ELECTRODE ACTIVE MATERIAL FOR LITHIUM-ION SECONDARY BATTERY AND PREPARATION METHOD AND USE THEREOF**
POSITIVELEKTRODENAKTIVMATERIAL FÜR LITHIUM-IONEN-SEKUNDÄRBATTERIE UND HERSTELLUNGSVERFAHREN UND VERWENDUNG DAVON
MATÉRIAU ACTIF D'ÉLECTRODE POSITIVE POUR BATTERIE SECONDAIRE AU LITHIUM-ION ET SON PROCÉDÉ DE PRÉPARATION ET SON UTILISATION

(30) Priority: 13.08.2015 CN 201510496030
(43) Date of publication of application: 20.06.2018
(73) Proprietor: Institute of Physics, Chinese Academy of Sciences, Beijing 100190 (CN)
(72) Inventor: WANG, Hao, Beijing 100190 (CN); LIN, Mingxiang, Beijing 100190 (CN); HUANG, Xuejie, Beijing 100190 (CN)
(74) Representative: Bingham, Ian Mark
(86) International application number: PCT/CN2016/093952
(87) International publication number: WO 2017/025007

(56) References cited:
- EP-A1- 2 590 246
- CN-A- 101 931 072
- CN-A- 103 107 337
- CN-A- 103 811 765
- CN-A- 104 617 267
- CN-A- 104 659 344
- CN-A- 104 810 512
- JP-A- 2013 062 089
- US-A1- 2010 151 331
- WANG, HONG ET AL.: 'Surface modification of spinel LiMn2O4 cathode material' CHINESE JOURNAL OF POWER SOURCES vol. 31, no. 3, 31 March 2007, pages 239 - 241, XP009508612

## Description

### Technical Field

The present invention relates to a cathode active material with a spinel structure for lithium-ion secondary battery and preparation methods and uses thereof.

### Background Art

Compared to other rechargeable battery systems, lithium-ion secondary batteries have the advantages of high operating voltage, light weight, small size, no memory effect, low self-discharge rate, long cycle life, high energy density, etc., and have been widely used in mobile phones, notebook computers, tablet computers and other mobile terminal products. In recent years, in consideration of environmental protection, electric vehicles have rapidly developed under the promotion from governments and automobile manufacturers, and lithium ion batteries have become an ideal power source for a new generation of electric vehicles by virtue of their excellent performances.

In lithium ion batteries, the cathode material, which accounts for about 30%-40% of the cost thereof, not only participates in the chemical reactions in the batteries as electrode materials, but also is the main source of lithium ions, having the greatest impact on the improvement of energy density and reduction of the cost of lithium ion batteries. At present, cathode materials for lithium ion batteries that are being studied much include lithium cobaltate (LiCoO₂) and lithium nickelate (LiNiO₂) having a layered structure, lithium manganate (LiMn₂O₄) having a spinel structure, and lithium iron phosphate (LiFePO₄) having an olivine structure. LiCoO₂ cathode material has been widely used in batteries for smart mobile phones, tablet computers and notebook computers, but cannot be applied to electric vehicles due to cost and safety issues. Spinel-structured LiMn₂O₄ has low cost of raw materials, simple production process, good resistance to overcharge, high safety, three-dimensional lithium ion diffusion channels, and good rate capability. However, its main disadvantages are in that, its capacity fades rapidly, especially at high temperatures; at the same time, Mn would dissolve during electrochemical cycle; and it is low in energy density and short in cycle life. Olivine-structured LiFePO₄ features low cost, environmental friendliness, high safety and long cycle life. However, its disadvantages include low working voltage (about 3.45V vs. Li/Li⁺), low energy density of a full-battery assembled together with graphite, low electron conductivity, poor rate capability and so on.

Compared with these traditional lithium ion battery cathode materials, lithium nickel manganese oxide (LiNi_{0.5}Mn_{1.5}O₄) has a theoretical specific capacity of 146.7 mAh/g, a reversible capacity of 136 mAh/g, an operating voltage of 4.7 V vs. Li/Li⁺, and a theoretical specific energy of 695 Wh/kg. In addition, due to LiNi_{0.5}Mn_{1.5}O₄ has a three-dimensional lithium ion transmission channel, it has better rate capability and can be charged and discharged rapidly, which is exactly what lithium ion batteries for electric vehicles require. In addition, the transition metal in LiNi_{0.5}Mn_{1.5}O₄ mainly comprises Mn, the cost being low. However, since the operating voltage of LiNi_{0.5}Mn_{1.5}O₄ is 4.7V vs. Li/Li⁺, which exceeds the electrochemical window of a common commercial electrolyte (about 4.5V vs. Li/Li⁺), it is resulted that the electrolyte is easily oxidized, and a cathode/electrolyte interface membrane (CEI membrane) is formed on the surface of LiNi_{0.5}Mn_{1.5}O₄ and is shown by the research to have poor electronic conductivity and Li⁺ conductivity; further, since the used electrolyte unavoidably contains traces of H₂O, which reacts with LiPF₆ in the electrolyte to generate HF, and LiNi_{0.5}Mn_{1.5}O₄ would be eroded by HF; and at the same time, the dissolution of manganese increases at high voltage, resulting in the increase of battery impedance and the fading of specific capacity. At room temperature (25°C), the decomposition rate of the electrolyte is low, and the specific capacity fading rate of the material is lower; but under a high temperature condition of 55°C, the decomposition of the electrolyte and the dissolution of manganese accelerate, making the impedance of the battery increase continuously and the capacity fade more rapidly.

### Disclosure of the Invention

Prior art document US2010/151331 discloses a positive active material having the composition LiMn_{1.5} Ni_{0.5}O₄ and including a surface-modifying layer having the composition Bi₂O₃. The compound Bi₂O₃ is coated as an island shape in an area of 50-60% based on 100% of the surface area of the active material.

Prior art document EP2590246 discloses a cathode active material comprising a Li-composite-oxide having the composition LiNi_{0.5}Mn_{1.5}O₄ and a Li-free oxide coating on the surface of the Li-composite-oxide having the composition SnZn₂O₄. The material is produced by mixing SnO and ZnO and sintering at about 1200°C to form SnZn₂O₄ and then mixing SnZn₂O₄ and LiNi_{0.5}Mn_{1.5}O₄ to prepare the final product.

### Disclosure of the Invention

It is an object of the present invention to provide a method for improving LiNi_{0.5}Mn_{1.5}O₄ so that the decomposition of electrolytes and the dissolution of manganese under the conditions of high charging voltage and high temperature are suppressed, thereby improving its capacity retention ratio and the charge-discharge coulomb efficiency. The improved material can act as a cathode active material for a lithium ion secondary battery, and batteries prepared from the material have excellent cycle performance.

The present inventors have found that, coated lithium transition metal oxides, such as LiNi_{0.5-x}Mn_{1.5-y}{A}ᵤO_{z}, wherein the surface of the material is partially covered by titanium dioxide in an island shape, and in the area that is not covered by titanium dioxide, magnesium oxide is coated as a thin layer or a shallow gradient solid solution is formed, have better cycle stability than uncoated lithium transition metal oxides when used in a lithium ion secondary battery. As a result, when the cathode active material of the present invention is applied to a lithium ion secondary battery, it can act as energy sources for applications such as electric tools, electric bicycles, hybrid electric vehicles, pure electric vehicles and so on. Besides TiO₂ and MgO, when other metal oxides, such as TiO₂, ZrO₂, SnO₂, SiO₂, GeO₂, HfO₂, Nb₂O₅ and other oxides of metals having a valence of four or higher as the island-shaped covering material and one or more of MgO, Al₂O₃, ZnO, CaO and other oxides of metals having a valence of lower than four as the surface coating or shallow gradient solid solution coating material, cover on the surface of the cathode active material, a similar effect can also be resulted in.

It is provided a spinel-structured cathode active material, the cathode active material comprising lithium-containing compound particles having a chemical formula of LiNi_{0.5-x}Nn_{1.5-y}{A}ᵤO_{z} and a first metal oxide and a second metal oxide coating on the surface of the lithium-containing compound particles, wherein the first metal oxide is an oxide of at least one metal having a valence of four or higher and covers partial surface of the lithium-containing compound in an island shape, and the second metal oxide is an oxide of at least one metal having a valence of lower than four and covers the partial surface of the lithium-containing compound particles that is not covered by the first metal oxide; doping element for replacing Ni and/or Mn, wᵢ is the atomic percentage of Bᵢ in the entire doping composition {A}, and ∑wᵢ =1; and wherein u=x+y; 0≤x≤0.2; 0≤y≤0.2; 0≤u≤0.4; and 3.8≤z≤4.2.

It is disclosed a cathode active material wherein the values of x, y, z and u are capable of producing a substantially single-phase lithium metal oxide, e.g., 95% or more, more preferably 99% or more of the material is single phase. It is disclosed suitable lithium metal oxides corresponding to the formula LiNi_{0.5-x}Mn_{1.5-y}{A}ᵤO_{z} include doped (where u>0) and undoped (where u=0) lithium metal oxides having the chemical formula of LiNi_{0.4}Mn_{1.5}Mg_{0.1}O₄, LiNi_{0.5}Mn_{1.5}O₄, LiNi_{0.4}Mn_{1.6}O₄, etc..

The cathode active material according to the present invention, the first metal oxide is selected from one or more of TiO₂, ZrO₂, SnO₂, SiO₂, GeO₂, CeO₂, HfO₂ and Nb₂O₅.

The cathode active material according to the present invention, the second metal oxide is selected from one or more of MgO, Al₂O₃, ZnO, Ce₂O₃, and CaO.

In one embodiment the LiNi_{0.5-x}Mn_{1.5-y}{A}ᵤO_{z} compound preferably contains one or more doping elements, i.e., u>0. The doping element Bᵢ is an element other than Ni and Mn, preferably selected from one or more of Al, Mg, Fe, Co, Ti, Y, Sc, Ce, Ru, Mo, W, Zr, Ca and Sr. More preferably, the doping element Bᵢ contains two or more doping cations.

It is disclosed that what is replaced by the doping element Bᵢ is the transition metals Ni and Mn instead of Li in the LiNi_{0.5-x}Mn_{1.5-y}{A}ᵤO_{z} compound, so as to maximize the discharge specific capacity of the lithium metal oxide. That is, the ratio of Li to O in the doped intercalation compound (u>0) is not less than the ratio of Li to O in the undoped intercalation compound (u=0). The doping element Bᵢ in the LiNi_{0.5-x}Mn_{1.5-y}{A}ᵤO_{z} compound may contain Li⁺.

It is disclosed a cathode active material wherein the lithium-containing compound particles have a particle size of 1-20 µm; and the first metal oxide has a particle size of 10-500 nm. It is disclosed a cathode active material wherein the coverage of the first metal oxide on the surface of the lithium-containing compound particles is 1-75%. The other area on the surface of the lithium-containing compound particles that is not covered by the first metal oxide is all coated with the second metal oxide.

It is disclosed a cathode active material wherein in the other area on the surface of the lithium-containing compound particles than that is covered by the first metal oxide, the second metal oxide has a thickness of 1-20 nm or a shallow gradient solid solution with a depth of less than 200 nm is formed.

The presences of LiNi_{0.5-x}Mn_{1.5-y}{A}ᵤO_{z} lithium metal oxides, oxides of metals having a valence of four or higher, and oxides of metals having a valence of lower than four in the spinel-structured cathode active material can be determined by any method known to one of ordinary skill in the art. For example, the relative amount of each of these compounds can be determined by measuring the area of the peak representing the aforementioned compound using X-ray diffraction methods.

It is disclosed a method for preparing the cathode active material, the method comprising the steps of:
(1) mixing source compounds of Li, Ni, Mn and optionally {A} and a source compound of a first metal oxide uniformly in a stoichiometric ratio;
(2) sintering the mixture obtained in step (1) sequentially at a temperature of 400-500°C and then at a temperature of 800-1000°C and cooling the same to prepare a lithium-containing compound with the surface covered by the first metal oxide in an island shape;
(3) mixing the lithium-containing compound with the surface covered by the first metal oxide in an island shape prepared in step (2) with a source compound of a second metal oxide;
(4) sintering the mixture obtained in step (3) at a temperature of 400-800°C and cooling the same to prepare the cathode active material.

It is disclosed a preparation method wherein the mixing in step (1) may be preferably dry mixing, and the mixing in step (3) may be preferably wet mixing.

The source compounds of Ni, Mn, Li and optionally {A} are intimately mixed in an amount sufficient to be able to provide a stoichiometric relationship of Ni, Mn, Li and {A} corresponding to the above mentioned LiNi_{0.5-x}Mn_{1.5-y}{A}ᵤO_{z}. The source compound may be a pure element, but is usually compound comprising an oxide, a salt or other compounds. For example, the source compound is typically a hydrated or anhydrous oxide, hydroxide, carbonate, nitrate, sulfate, chloride or fluoride, and may also be any other suitable source compound as long as it does not lead to element defect in the resulting intercalation compound. Preferably, the source compounds are oxides, acetates or carbonates, because gaseous by-products produced during the sintering of these compounds are more environmentally friendly. Each element of the lithium metal oxide may be provided from a single source compound, or at least two elements may be provided from the same source material compound (i.e., a precursor containing two or more elements prepared by a coprecipitation method). The source compounds can be intimately mixed in any desired sequence.

As used herein, the term "intimately mixed" means that the source compounds are thoroughly mixed together, so that these source compounds can form a single-phase lithium metal oxide once sintered. According to the present invention, the source compounds are often preferably intimately mixed, so that they can produce a substantially single-phase lithium metal oxide. The source compounds are preferably dry mixed, for example, the source compounds are mixed in a ball mill to produce a intimately mixed mixture. However, as another alternative, wet processing methods such as sol-gel reaction and spray drying and so on may also be used, either alone or in combination with dry mixing.

It is provided a positive electrode for a lithium ion battery, the positive electrode comprising a current collector and a cathode active material, a carbon material conductive additive and a binder loaded on the current collector, wherein the cathode active material is the cathode active material provided by the present invention or a cathode active material prepared according to the method of the present disclosure.

It is provided a lithium ion battery, the battery comprising a battery case, an electrode group and an electrolyte, the electrode group and the electrolyte being sealed in the battery case, and the electrode group comprising a positive electrode, a separator, and a negative electrode, wherein the positive electrode is the positive electrode provided by the present invention.

The cathode active material provided is characterized in that an oxide of a metal having a valence of four or higher than four covers partial surface of the lithium transition metal oxide particles in an island shape, and that the uncovered area is coated with an oxide of a metal having a valence of lower than four as a thin layer or forms a shallow surface solid solution. When this cathode active material is applied to a lithium ion secondary battery, it has better cycle stability than uncoated lithium transition metal oxides. Therefore, when the cathode active material is applied to a lithium ion secondary battery, it can act as energy sources for applications such as electric tools, electric bicycles, hybrid electric vehicles, and pure electric vehicles.

### Brief Description of the Drawings

In the following, the embodiments of the present invention are described in detail with reference to the accompanying drawings, in which:
Fig. 1 shows the XRD spectra of the cathode active materials A2 and A18 prepared in Example 2 and Example 18 (Comparative examples) respectively.
Fig. 2 shows the SEM image of the cathode active material A18 prepared in Example 18.
Fig. 3 shows the SEM image of the cathode active material A2 prepared in Example 2.
Fig. 4 is a trend graph of the discharge capacity changing over the number of cycles for the batteries B2 and B18 assembled from the materials A2 and A18 prepared in Example 2 and Example 18 (Comparative example) under a high-temperature test environment of 55°C.
Fig. 5 is a trend graph of the discharge capacity changing over the number of cycles for the batteries B2 and B18 assembled from the materials A2 and A18 prepared in Example 2 and Example 18 (Comparative example) under a room temperature test environment of 25°C.
Fig. 6 is a trend graph of the discharge capacity changing over the number of

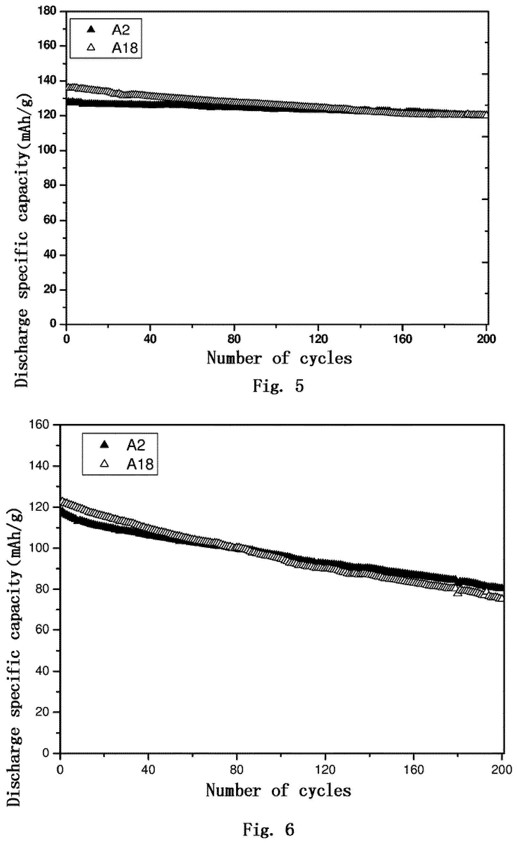

Fig. 6 is a trend graph of the discharge capacity changing over the number of cycles for the full-batteries C2 and C18 respectively assembled from the positive electrode plates respectively prepared from the materials A2 and A18 paring with graphite negative electrode under a room temperature test environment of 25°C.

### Detailed Description

The present invention will be further described in detail below with reference to the specific embodiments, and the examples are given to illustrate the present invention, rather than to limit the scope of the present invention. Examples 1, 14 and 16 do not fall within the scope of the presently claimed invention.

### Example 1 (does not fall within the scope of the present invention)

37.323 g of Li₂CO₃ (purity was 99%), 179.7537 g of Ni_{0.25}Mn_{0.75}(OH)₂, and 0.7795 g of TiO₂ (the particles had a particle size of about 100 nm) were placed in a planetary ball mill and mixed evenly by dry method. The mixture was added in a crucible, placed in a muffle furnace, pre-sintered at 500°C for 5 hours first, then heated to 900°C sintered for 12 hours, and naturally cooled to obtain the LiNi_{0.5}Mn_{1.5}O₄ particle material with the surface partially covered by TiO₂ particles (the coverage was about 20%; the particle size of TiO₂ particles was about 100 nm) (this material was referred to as A1).

### Example 2

183 g of the A1 material prepared in Example 1 and 2.145 g of Mg(CH₃COO)₂•4H₂O (purity was 99.97%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by TiO₂ particles (the coverage was about 20%; the particle size of the TiO₂ particles was about 100 nm) and the remaining area completely coated with MgO (the thickness of the MgO coating layer was about 3 nm) (this material was referred to as A2).

37.323 g of Li₂CO₃ (purity was 99%), 179.7537 g of Ni_{0.25}Mn_{0.75}(OH)₂, and 1.245 g of ZrO₂ (purity was 99%, the particle size of the particles was about 100 nm) were added in a planetary ball mill and mixed evenly by dry method. The mixture was added in a crucible, placed in a muffle furnace, pre-sintered at 500°C for 5 hours first, then heated to 900°C sintered for 12 h, and naturally cooled to obtain the LiNi_{0.5}Mn_{1.5}O₄ particle material with the surface partially covered by ZrO₂ particles (the coverage was about 20%; the particle size of ZrO₂ particles was about 100 nm).

184 g of the above prepared LiNi_{0.5}Mn_{1.5}O₄ particle material with the surface partially covered by ZrO₂ particles (the coverage was about 20%; the particle size of ZrO₂ particles was about 100 nm) and 2.145 g of Mg(CH₃COO)₂•4H₂O (purity was 99.997%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by ZrO₂ particles (the coverage was about 20%; the particle size of the ZrO₂ particles was about 100 nm) and the remaining area completely coated with MgO (the thickness of the MgO coating layer was about 3 nm) (this material was referred to as A3).

### Example 4

37.323 g of Li₂CO₃ (purity was 99%), 179.7537 g of Ni_{0.25}Mn_{0.75}(OH)₂, and 2.66 g of Nb₂O₅ (purity was 99%, the particle size of the particles was about 100 nm) were added in a planetary ball mill and mixed evenly by dry method. The mixture was added in a crucible, placed in a muffle furnace, pre-sintered at 500°C for 5 hours first, then heated to 900°C, sintered for 12 h, and naturally cooled to obtain the LiNi_{0.5}Mn_{1.5}O₄ particle material with the surface partially covered by Nb₂O₅ particles (the coverage was about 20%; the particle size of Nb₂O₅ particles was about 100 nm).

185 g of the above prepared LiNi_{0.5}Mn_{1.5}O₄ particle material with the surface partially covered by Nb₂O₅ particles (the coverage was about 20%; the particle size of Nb₂O₅ particles was about 100 nm) and 2.145 g of Mg(CH₃COO)₂•4H₂O (purity was 99.997%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by Nb₂O₅ particles (the coverage was about 20%; the particle size of the Nb₂O₅ particles was about 100 nm) and the remaining area completely coated with MgO (the thickness of the MgO coating layer was about 3 nm) (this material was referred to as A4).

### Examples 5

37.323 g of Li₂CO₃ (purity was 99%), 179.7537 g of Ni_{0.25}Mn_{0.75}(OH)₂, and 1.599 g of TiO₂ (purity was 99%, the particle size of the particles was about 100 nm) were added in a planetary ball mill and mixed evenly by dry method. The mixture was added in a crucible, placed in a muffle furnace, pre-sintered at 500°C for 5 hours first, then heated to 900°C, sintered for 12 h, and naturally cooled to obtain the LiNi_{0.5}Mn_{1.5}O₄ particle material with the surface partially covered by TiO₂ particles (the coverage was about 20%; the particle size of TiO₂ particles was about 100 nm).

184 g of the above prepared LiNi_{0.5}Mn_{1.5}O₄ particle material with the surface partially covered by TiO₂ particles (the coverage was about 40%; the particle size of TiO₂ particles was about 100 nm) and 2.145 g of Mg(CH₃COO)₂•4H₂O (purity was 99.997%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by TiO₂ particles (the coverage was about 40%; the particle size of the TiO₂ particles was about 100 nm) and the remaining area completely coated with MgO (the thickness of the MgO coating layer was about 3 nm) (this material was referred to as A5).

### Example 6

37.323 g of Li₂CO₃ (purity was 99%), 179.7537 g of Ni_{0.25}Mn_{0.75}(OH)₂, and 2.4 g of TiO₂ (purity was 99%, the particle size of the particles was about 100 nm) were added in a planetary ball mill and mixed evenly by dry method. The mixture was added in a crucible, placed in a muffle furnace, first pre-sintered at 500°C for 5 hours, then heated to 900°C, sintered for 12 h, and naturally cooled to obtain the LiNi_{0.5}Mn_{1.5}O₄ particle material with the surface partially covered by TiO₂ particles (the coverage was about 60%; the particle size of TiO₂ particles was about 100 nm).

184 g of the above prepared LiNi_{0.5}Mn_{1.5}O₄ particle material with the surface partially covered by TiO₂ particles (the coverage was about 60%; the particle size of TiO₂ particles was about 100 nm) and 2.145 g of Mg(CH₃COO)₂•4H₂O (purity was 99.997%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by TiO₂ particles (the coverage was about 60%; the particle size of the TiO₂ particles was about 100 nm) and the remaining area completely coated with MgO (the thickness of the MgO coating layer was about 3 nm) (this material was referred to as A6).

### Example 7

37.323 g of Li₂CO₃ (purity was 99%), 179.7537 g of Ni_{0.25}Mn_{0.75}(OH)₂, and 0.7995 g of TiO₂ (purity was 99.9%, the particle size of the particles was about 50 nm) were added in a planetary ball mill and mixed evenly by dry method. The mixture was added in a crucible, placed in a muffle furnace, first pre-sintered at 500°C for 5 hours, then heated to 900°C, sintered for 12 h, and naturally cooled to obtain the LiNi_{0.5}Mn_{1.5}O₄ particle material with the surface partially covered by TiO₂ particles (the coverage was about 20%; the particle size of TiO₂ particles was about 50 nm).

183 g of the above prepared LiNi_{0.5}Mn_{1.5}O₄ particle material with the surface partially covered by TiO₂ particles (the coverage was about 20%; the particle size of TiO₂ particles was about 50 nm) and 2.145 g of Mg(CH₃COO)₂•4H₂O (purity was 99.997%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by TiO₂ particles (the coverage was about 20%; the particle size of the TiO₂ particles was about 50 nm) and the remaining area completely coated with MgO (the thickness of the MgO coating layer was about 3 nm) (this material was referred to as A7).

### Example 8

37.323 g of Li₂CO₃ (purity was 99%), 179.7537 g of Ni_{0.25}Mn_{0.75}(OH)₂, and 0.7995 g of TiO₂ (purity was 99.9%, the particle size of the particles was about 150 nm) were added in a planetary ball mill and mixed evenly by dry method. The mixture was added in a crucible, placed in a muffle furnace, first pre-sintered at 500°C for 5 hours, then heated to 900°C, sintered for 12 h, and naturally cooled to obtain the LiNi_{0.5}Mn_{1.5}O₄ particle material with the surface partially covered by TiO₂ particles (the coverage was about 20%; the particle size of TiO₂ particles was about 150 nm).

183 g of the above prepared LiNi_{0.5}Mn_{1.5}O₄ particle material with the surface partially covered by TiO₂ particles (the coverage was about 20%; the particle size of TiO₂ particles was about 150 nm) and 2.145 g of Mg(CH₃COO)₂•4H₂O (purity was 99.997%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by TiO₂ particles (the coverage was about 20%; the particle size of the TiO₂ particles was about 150 nm) and the remaining area completely coated with MgO (the thickness of the MgO coating layer was about 3 nm) (this material was referred to as A8).

### Example 9

37.323 g of Li₂CO₃ (purity was 99%), 179.7537 g of Ni_{0.25}Mn_{0.75}(OH)₂, and 0.7995 g of TiO₂ (purity was 99.9%, the particle size of the particles was about 200 nm) were added in a planetary ball mill and mixed evenly by dry method. The mixture was added in a crucible, placed in a muffle furnace, first pre-sintered at 500°C for 5 hours, then heated to 900°C, sintered for 12 h, and naturally cooled to obtain the LiNi_{0.5}Mn_{1.5}O₄ particle material with the surface partially covered by TiO₂ particles (the coverage was about 20%; the particle size of TiO₂ particles was about 200 nm).

183 g of the above prepared LiNi_{0.5}Mn_{1.5}O₄ particle material with the surface partially covered by TiO₂ particles (the coverage was about 20%; the particle size of TiO₂ particles was about 200 nm) and 2.145 g of Mg(CH₃COO)₂•4H₂O (purity was 99.997%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by TiO₂ particles (the coverage was about 20%; the particle size of the TiO₂ particles was about 200 nm) and the remaining area completely coated with MgO (the thickness of the MgO coating layer was about 3 nm) (this material was referred to as A9).

### Example 10

37.323 g of Li₂CO₃ (purity was 99%), 179.7537 g of Ni_{0.25}Mn_{0.75}(OH)₂, and 0.7995 g of TiO₂ (purity was 99.9%, the particle size of the particles was about 100 nm) were added in a planetary ball mill and mixed evenly by dry method. The mixture was added in a crucible, placed in a muffle furnace, first pre-sintered at 500°C for 5 hours, then heated to 900°C, sintered for 12 h, and naturally cooled to obtain the LiNi_{0.5}Mn_{1.5}O₄ particle material with the surface partially covered by TiO₂ particles (the coverage was about 20%; the particle size of TiO₂ particles was about 100 nm).

183 g of the above prepared LiNi_{0.5}Mn_{1.5}O₄ particle material with the surface partially covered by TiO₂ particles (the coverage was about 20%; the particle size of TiO₂ particles was about 100 nm) and 4.29 g of Mg(CH₃COO)₂•4H₂O (purity was 99.997%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by TiO₂ particles (the coverage was about 20%; the particle size of the TiO₂ particles was about 100 nm) and the remaining area completely coated with MgO (the thickness of the MgO coating layer was about 6 nm) (this material was referred to as A10).

### Example 11

37.323 g of Li₂CO₃ (purity was 99%), 179.7537 g of Ni_{0.25}Mn_{0.75}(OH)₂, and 0.7995 g of TiO₂ (purity was 99.9%, the particle size of the particles was about 100 nm) were added in a planetary ball mill and mixed evenly by dry method. The mixture was added in a crucible, placed in a muffle furnace, first pre-sintered at 500°C for 5 hours, then heated to 900°C, sintered for 12 h, and naturally cooled to obtain the LiNi_{0.5}Mn_{1.5}O₄ particle material with the surface partially covered by TiO₂ particles (the coverage was about 20%; the particle size of TiO₂ particles was about 100 nm).

183 g of the above prepared LiNi_{0.5}Mn_{1.5}O₄ particle material with the surface partially covered by TiO₂ particles (the coverage was about 20%; the particle size of TiO₂ particles was about 100 nm) and 6.435 g of Mg(CH₃COO)₂•4H₂O (purity was 99.997%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by TiO₂ particles (the coverage was about 20%; the particle size of the TiO₂ particles was about 100 nm) and the remaining area completely coated with MgO (the thickness of the MgO coating layer was about 9 nm) (this material was referred to as A11).

### Example 12

37.323 g of Li₂CO₃ (purity was 99%), 179.7537 g of Ni_{0.25}Mn_{0.75}(OH)₂, and 0.7995 g of TiO₂ (purity was 99.9%, the particle size of the particles was about 100 nm) were added in a planetary ball mill and mixed evenly by dry method. The mixture was added in a crucible, placed in a muffle furnace, first pre-sintered at 500°C for 5 hours, then heated to 900°C, sintered for 12 h, and naturally cooled to obtain the LiNi_{0.5}Mn_{1.5}O₄ particle material with the surface partially covered by TiO₂ particles (the coverage was about 20%; the particle size of TiO₂ particles was about 100 nm).

183 g of the above prepared LiNi_{0.5}Mn_{1.5}O₄ particle material with the surface partially covered by TiO₂ particles (the coverage was about 20%; the particle size of TiO₂ particles was about 100 nm) and 2.263 g of Zn(CH₃COO)₂•2H₂O (purity was 97%) were placed in a beaker containing 500 ml of deionized water, the beaker was added in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by TiO₂ particles (the coverage was about 20%; the particle size of the TiO₂ particles was about 100 nm) and the remaining area completely coated with ZnO (the thickness of the ZnO coating layer was about 3 nm) (this material was referred to as A12).

### Example 13

37.323 g of Li₂CO₃ (purity was 99%), 179.7537 g of Ni_{0.25}Mn_{0.75}(OH)₂, and 0.7995 g of TiO₂ (purity was 99.9%, the particle size of the particles was about 100 nm) were added in a planetary ball mill and mixed evenly by dry method. 100 nm) were added in a planetary ball mill and mixed evenly by dry method. The mixture was added in a crucible, placed in a muffle furnace, first pre-sintered at 500°C for 5 hours, then heated to 900°C, sintered for 12 h, and naturally cooled to obtain the LiNi_{0.5}Mn_{1.5}O₄ particle material with the surface partially covered by TiO₂ particles (the coverage was about 20%; the particle size of TiO₂ particles was about 100 nm).

183 g of the above prepared LiNi_{0.5}Mn_{1.5}O₄ particle material with the surface partially covered by TiO₂ particles (the coverage was about 20%; the particle size of TiO₂ particles was about 100 nm) and 4.13 g of aluminum isopropoxide (purity was 99%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.5}Mn_{1.5}O₄ particle material with the surface partially covered by TiO₂ particles (the coverage was about 20%; the particle size of the TiO₂ particles was about 100 nm) and the remaining area completely coated with Al₂O₃ (the thickness of the Al₂O₃ coating layer was about 3 nm) (this material was referred to as A13).

### Example 14 (does not fall within the scope of the present invention)

37.323 g of Li₂CO₃ (purity was 99%), 179.7537 g of Ni_{0.2}Mn_{0.75}Mg_{0.05}(OH)₂, and 0.7995 g of TiO₂ (purity was 99.9%, the particle size of the particles was about 100 nm) were added in a planetary ball mill and mixed evenly by dry method. The mixture was added in a crucible, placed in a muffle furnace, first pre-sintered at 500°C for 5 hours, then heated to 900°C, sintered for 12 h, and naturally cooled to obtain the LiNi_{0.4}Mn_{1.5}Mg_{0.1}O₄ particle material with the surface partially covered by TiO₂ particles (the coverage was about 20%; the particle size of TiO₂ particles was about 100 nm) (this material was referred to as A14).

### Example 15

183 g of the A14 material prepared in Example 14 and 2.145 g of Mg(CH₃COO)₂•4H₂O (purity was 99.997%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.4}Mn_{1.5}Mg_{0.1}O₄ particle material with the surface partially covered by TiO₂ particles (the coverage was about 20%; the particle size of the TiO₂ particles was about 100 nm) and the remaining area completely coated with MgO (the thickness of the MgO coating layer was about 3 nm) (this material was referred to as A15).

### Example 16 (does not fall within the scope of the present invention)

37.323 g of Li₂CO₃ (purity was 99%), 179.7537 g of Ni_{0.225}Mn_{0.725}Al_{0.05}(OH)₂, and 0.7995 g of TiO₂ (purchased from Alfa Aesar Corporation, purity was 99.9%, the particle size of the particles was about 100 nm) were added in a planetary ball mill and mixed evenly by dry method. The mixture was added in a crucible, placed in a muffle furnace, first pre-sintered at 500°C for 5 hours, then heated to 900°C, sintered for 12 h, and naturally cooled to obtain the LiNi_{0.45}Mn_{1.45}Al_{0.1}O₄ particle material with the surface partially covered by TiO₂ particles (the coverage was about 20%; the particle size of TiO₂ particles was about 100 nm) (this material was referred to as A16).

### Example 17

183 g of the A16 material prepared in Example 16 and 2.145 g of Mg(CH₃COO)₂•4H₂O (purity was 99.997%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 500°C for 5 hours, and naturally cooled to obtain the LiNi_{0.45}Mn_{1.45}Al_{0.1}O₄ particle material with the surface partially covered by TiO₂ particles (the coverage was about 20%) and the remaining area completely coated with MgO (the thickness of the MgO coating layer was about 3 nm) (this material was referred to as A17).

### Example 18 (Comparative Example)

37.323 g of Li₂CO₃ (purity was 99%) and 179.7537 g of Ni_{0.25}Mn_{0.75}(OH)₂ were added in a planetary ball mill and mixed evenly by dry method. The mixture was placed in a crucible, placed in a muffle furnace, first pre-sintered at 500°C for 5 hours, then heated to 900°C, sintered for 12 h, and naturally cooled to obtain the LiNi_{0.5}Mn_{1.5}O₄ particle material (this material was referred to as A18).

### Example 19

183 g of the A1 material prepared in Example 1 and 2.145 g of Mg(CH₃COO)₂•4H₂O (purity was 99.97%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 600°C for 5 hours, and naturally cooled to obtain the LiNi_{0.5}Mn_{1.5}O₄ particle material with the surface partially covered by TiO₂ particles (the coverage was about 20%; the particle size of the TiO₂ particles was about 100 nm) and the remaining area forming a LiNi_{0.5-x}Mn_{1.5}MgₓO₄ shallow solid solution with a thickness of 20 nm (this material was referred to as A19).

### Example 20

183 g of the A1 material prepared in Example 1 and 4.13 g of aluminum isopropoxide (purity was 99%) were added in a beaker containing 500 ml of deionized water, the beaker was placed in a magnetic stirrer for uniformly stirring for 12 hours (stirring speed was 500 rpm), and then the deionized water was completely evaporated. The resulting mixture was then placed in a muffle furnace (under air atmosphere), sintered at 60°C for 5 hours, and naturally cooled to obtain the LiNi_{0.5}Mn_{1.5}O₄ particle material with the surface partially covered by TiO₂ particles (the coverage was about 20%; the particle size of the TiO₂ particles was about 100 nm) and the remaining area forming a LiNi_{0.5-x}Mn_{1.5-y}Al_{x+y}O₄ shallow solid solution with a thickness of 20 nm (this material was referred to as A20).

### Morphology Characterization

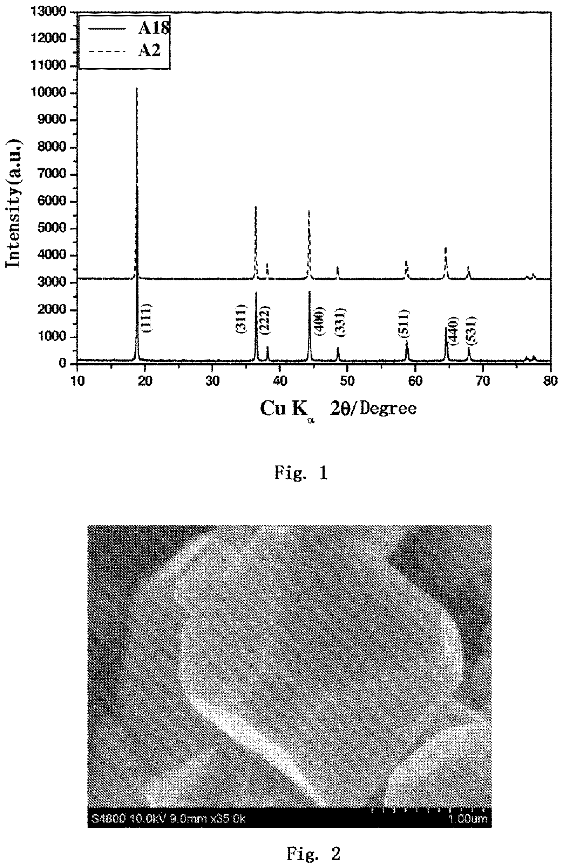

Fig. 1 shows the XRD spectra of the materials A2 and A18 (comparative material), there being almost no difference in XRDs of the two and both being cubic spinel-structured, indicating that the LiNi_{0.5}Mn_{1.5}O₄ material after being coated with TiO₂ and MgO (A2 material) has no change in the structure.

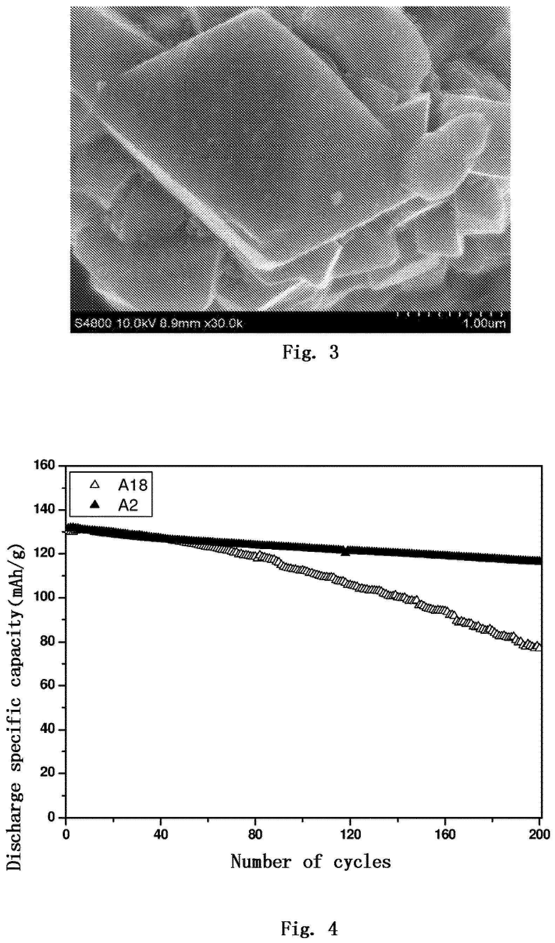

Fig. 2 and Fig. 3 show the SEM images of A18 (comparative material) and A2 respectively, the morphology of A18 (comparative material) being a regular truncated octahedron with a smooth surface, and the surface of A2 material being partially covered by TiO₂ particles and the other area being covered with MgO material. In Fig. 3, LiNi_{0.5}Mn_{1.5}O₄ particles have a particle size of 1-20 µm and TiO₂ particles have a particle size of 50-200 nm.

### Performance Test

The materials A1 to A20 prepared in Examples 1 to 20 were assembled into button batteries in accordance with the following steps.

### (1) Preparation of positive plate and negative plate

The materials A1 to A20 prepared in Examples 1 to 20 were respectively used as a cathode active material, carbon black as a conductive additive, and polyvinylidene fluoride (PVDF) as a binder, and they were dispersed in N-methylpyrrolidone (NMP) at a weight ratio of 90:5:5, mixed uniformly, and prepared into a uniform cathode slurry. The uniform cathode slurry was evenly coated on an aluminum foil current collector having a thickness of 15 µm, dried at 55°C to form a electrode plate with a thickness of 100 µm, the electrode plate was rolled under a roller press (pressure was about 1 MPa × 1.5 cm²), the electrode plate was cut into a round plate having a diameter of ϕ 14 mm, and the round plate was placed in a vacuum oven and baked at 120°C for 6h, naturally cooled, then taken out and placed in a glove box as a positive plate.

Graphite was used as a anode active material, carbon black as a conductive additive, and polyvinylidene fluoride (PVDF) as a binder, and they were dispersed in N-methylpyrrolidone (NMP) at a weight ratio of 90:5:5, mixed uniformly, and prepared into a uniform anode slurry. The uniform anode slurry was evenly coated on an aluminum foil current collector having a thickness of 8 µm, dried at 55°C to form a electrode plate having a thickness of 100 µm, the electrode plate was rolled under a roller press (pressure was about 1MPa × 1.5 cm²), the electrode plate was cut into a round plate having a diameter of ϕ 15 mm, and the round plate was placed in a vacuum oven and baked at 120°C for 6h, naturally cooled, then taken out and placed in a glove box as a negative plate.

### (2) Assembling the lithium ion secondary battery

In a glove box filled with an inert atmosphere, lithium metal was used as the negative electrode of the battery, a double-aluminum oxide coated PP/PE/PP three-layer membrane as a separator was placed between the positive electrode and negative electrode, a non-aqueous electrolyte with 1M LiPF₆ dissolved in EC/DMC (1:1, a volume ratio) was added dropwise, and the positive plate prepared in the step (1) was used as the positive electrode, to assemble into a button battery having a model number CR2032 (referred to as B1 to B20).

In a glove box filled with an inert atmosphere, the graphite negative plate prepared in the step (1) was used as the negative electrode of the battery, a double-aluminum oxide coated PP/PE/PP three-layer film as a separator was placed between the positive electrode and the negative electrode, a non-aqueous electrolyte with 1M LiPF₆ dissolved in EC/DMC (1:1, a volume ratio) was added dropwise, and the positive plate prepared in the step (1) was used as the positive electrode, to assemble into a button battery having a model number CR2032 (referred to as C1 to C20).

### Test Examples 1 to 20

The prepared button batteries B1 to B20 were allowed to stand for 10 hours at room temperature (25°C), and then the above-prepared button batteries were subjected to a charge-discharge cycle test using a Land battery charge-discharge tester. First at room temperature (25°C), it was cycled at a ratio of 0.1C for 1 cycle, and then was continued to be cycled at a ratio of 0.2C for 4 cycles, wherein the charge-discharge voltage of the battery was controlled to range from 3.5V to 4.9V. Then, the button battery was transferred to a high temperature environment of 55°C, and was continued to be cycled at a ratio of 0.2C for 200 cycles, and at the same time, the charge-discharge voltage of the battery was still controlled to range from 3.5 V to 4.9 V. The capacity retention ratios of the button batteries B1 to B20 after they were cycled in a high-temperature environment of 55°C for 200 cycles were referred to as D1 to D20, respectively.

The prepared button batteries B1 to B20 were allowed to stand for 10 hours at room temperature (25°C), and then the above-prepared button batteries were subjected to a charge-discharge cycle test using a Land battery charge-discharge tester. First at room temperature (25°C), it was cycled at a ratio of 0.1 C for 1 cycle and then was continued to be cycled at a ratio of 0.2 C for 199 cycles, wherein the charge-discharge voltage of the battery was controlled to range from 3.5V to 4.9V. The capacity retention ratios of the button batteries B1 to B20 after they were cycled in a room temperature environment of 25°C for 200 cycles were referred to as E1 to E20, respectively.

The prepared button batteries C1 to C20 were allowed to stand for 10 hours at room temperature (25°C), and then the above-prepared button batteries were subjected to a charge/discharge cycle test using a Land battery charge-discharge tester (purchased from Wuhan Land Electronics Co., Ltd.). First at room temperature (25°C), it was cycled at a ratio of 0.1C for 1 cycle, and then was continued to be cycled at a ratio of 0.2C for 199 cycles, wherein the charge-discharge voltage of the battery was controlled to range from 3.4V to 4.8V. The capacity retention ratios of the button batteries C1 to C20 after they were cycled for 200 cycles in a room temperature environment of 25°C were referred to as F1 to F20, respectively. Table 1 shows the test results for the Test Examples 1 to 18 (D1 to D20 and E1 to E20 and F1 to F20).

**Table 1**

| The capacity retention ratios D1 to D20 of B1 to B18 after cycled for 200 cycles in a high-temperature of 55°C | The capacity retention ratios E1 to E20 of B1 to B18 after cycled for 200 cycles in a room temperature of 25°C | The capacity retention ratios F1 to F20 of C1 to C18 after cycled for 200 cycles in a room temperature of 25°C |
|---|---|---|
| D1 was 82% | E1 was 91% | F1 was 65% |
| D2 was 88% | E2 was 95% | F2 was 68% |
| D3 was 87% | E3 was 92% | F3 was 67% |
| D4 was 86% | E4 was 93% | F4 was 66% |
| D5 was 85% | E5 was 92% | F5 was 67% |
| D6 was 86% | E6 was 91% | F6 was 63% |
| D7 was 87% | E7 was 93% | F7 was 64% |
| D8 was 86% | E8 was 92% | F8 was 68% |
| D9 was 86% | E9 was 95% | F9 was 65% |
| D10 was 85% | E10 was 96% | F10 was 66% |
| D11 was 88% | E11 was 95% | F11 was 63% |
| D12 was 86% | E12 was 91% | F12 was 64% |
| D13 was 87% | E13 was 94% | F13 was 65% |
| D14 was 85% | E14 was 93% | F14 was 65% |
| D15 was 86% | E15 was 92% | F15 was 67% |
| D16 was 87% | E16 was 94% | F16 was 68% |
| D17 was 85% | E17 was 93% | F17 was 64% |
| D18 was 86% | E18 was 88% | F18 was 62% |
| D19 was 85% | E19 was 90% | F19 was 64% |
| D20 was 87% | E20 was 92% | F20 was 65% |

Fig. 4 is a trend graph of the discharge capacity changing over the number of cycles for batteries B2 and B18 assembled from materials A2 and A18 prepared in Example 2 and Example 18 (Comparative example) under a high-temperature test environment of 55°C. The results showed that, the battery B18 assembled from uncoated A18 (comparative material) had a capacity retention ratio of about 60% after 200 cycles under a high temperature test environment of 55°C, and the capacity fading was rapid. This is because under the high temperature test environment, the decomposition of the electrolyte and the dissolution of Mn were exacerbated, which resulted in rapid fading of the capacity of the material. Battery B2 assembled from A2 material had a capacity retention ratio of about 88% after 200 cycles under a high temperature test environment of 55°C. This is because after being coated with TiO₂ and MgO, the direct contact between the LiNi_{0.5}Mn_{1.5}O₄ material and the electrolyte was hindered, and the decomposition of the electrolyte and the dissolution of Mn were suppressed, thus the cycling stability of the battery being improved.

Fig. 5 is a trend graph of the discharge capacity changing over the number of cycles for batteries B2 and B18 assembled from materials A2 and A18 prepared in Example 2 and Example 18 (Comparative example) under a room temperature test environment of 25°C. The results showed that B2 battery assembled from A2 material had a capacity retention ratio of about 95% after 200 cycles under a room temperature test environment of 25°C, while B18 battery assembled from A18 (comparative material) material had a capacity retention ratio of about 88% after 200 cycles under a room temperature test environment of 25°C. The capacity retention ratios (88% and 95%) of both A18 material and A2 material under a room temperature test environment of 25°C were higher than the capacity retention ratios (60% and 88%) under a high temperature test environment of 55°C, because the decomposition of the electrolyte and the dissolution of Mn were less under the room temperature than under the high temperature, thus the capacity retention ratios under the room temperature being higher.

Fig. 6 is a trend graph of the discharge capacity changing over the number of cycles for full-batteries C2 and C18 respectively assembled from the positive plates respectively prepared from materials A2 and A18 paring with graphite negative electrode under a room temperature test environment of 25°C. The results showed that full-battery C2 had a capacity retention ratio of about 68% after 200 cycles under a room temperature test environment of 25°C, while full-battery C18 had a capacity retention ratio of about 62% after 200 cycles under a room temperature test environment of 25°C. This is because an SEI film would form on the surface of the graphite negative electrode during cycling of the full-battery, the recyclable lithium ions from the cathode material were consumed, and at the same time the electrolyte decomposed and Mn dissolved, resulting in that the uncoated material A18 had poorer cycling stability under room temperature, while the full-battery assembled from TiO₂ and MgO coated A2 material had its cycling stability improved, and the capacity retention ratio after 200 cycles was about 68%.

Finally, it should be explained that the foregoing examples are merely intended to illustrate the technical solutions of the present invention, but not to limit it; although the present invention is described in detail with reference to the foregoing examples, it should be understood by those skilled in the art that, the technical solutions recited in the foregoing examples may still be modified or equivalent replacements may be made to part or all of the technical features therein; and these modifications or replacements do not make the nature of the corresponding technical solution depart from the scope of the technical solutions of the examples of the present invention.

## Claims

1. A cathode active material with a spinel structure, **characterized in that**, the cathode active material comprises particles of a lithium-containing compound having a chemical formula of LiNi_{0.5-x}Mn_{1.5-y}{A}ᵤO_{z} and a first metal oxide and a second metal oxide coating the surface of the particles of the lithium-containing compound, wherein the first metal oxide is selected from one or more of TiO₂, ZrO₂, SnO₂, SiO₂, GeO₂, CeO₂, HfO₂, and Nb₂O₅, and partially covers the surface of the particles of the lithium-containing compound in an island shape, the second metal oxide is selected from one or more of Al₂O₃, MgO, ZnO, Ce₂O₃, and CaO, and covers the partial surface of the particles of the lithium-containing compound that is not covered by the first metal oxide; wherein {A} is a doping composition represented by a formula of ΣwᵢBᵢ, wherein Bᵢ is a doping element for replacing Ni and/or Mn, wᵢ is the atomic percentage of Bᵢ in the entire doping composition {A}, and Σwᵢ=1; and wherein u=x+y; 0≤x≤0.2; 0≤y≤0.2; 0≤u≤0.4; and 3.8≤z≤4.2.

2. The cathode active material according to claim 1, **characterised in that** u> 0.

3. The cathode active material according to claim 1, **characterised in that** Bᵢ is selected from one or more of the group consisting of Al, Mg, Fe, Co, Ti, Y, Sc, Ru, Cu, Mo, Ce, W, Zr, Ca and Sr.

4. The cathode active material according to any one of claims 1 to 3, **characterised in that** the particles of the lithium-containing compound have a particle size of 1-20 µm; and the first metal oxide has a particle size of 10-500 nm.

5. The cathode active material according to any one of claims 1 to 3, **characterised in that** the coverage of the first metal oxide on the surface of the particles of the lithium-containing compound is 1-75%.

6. The cathode active material according to any one of claims 1 to 3, **characterised in that**, in the other area on the surface of the particles of the lithium-containing compound than that is covered by the first metal oxide, the second metal oxide has a thickness of 1-20 nm or a shallow gradient solid solution with a depth of less than 200 nm is formed.

7. A method for preparing a cathode active material according to any one of claims 1 to 6, the method **characterised by** comprising the steps of:
(1) mixing source compounds of Li, Ni, Mn and optionally {A} and a source compound of a first metal oxide uniformly in a stoichiometric ratio;
(2) sintering the mixture obtained in step (1) sequentially at a temperature of 400-500°C and then at a temperature of 800-1000°C and cooling the same to prepare a lithium-containing compound with the surface covered by the first metal oxide in an island shape;
(3) mixing the lithium-containing compound with the surface covered by the first metal oxide in an island shape prepared in step (2) with a source compound of a second metal oxide;
(4) sintering the mixture obtained in step (3) at a temperature of 400-800°C and cooling the same to prepare the cathode active material.

8. The preparation method according to claim 7, **characterised in that** the mixing in step (1) is dry mixing, and the mixing in step (3) is wet mixing.

9. A positive electrode for a lithium-ion battery, **characterised in that** the positive electrode comprising a current collector, and a cathode active material, a carbon material conductive additive and a binder loaded on the current collector, **characterized in that** the cathode active material is a cathode active material according to any one of claims 1 to 6.

10. A lithium-ion battery, the battery being **characterised by** comprising a battery case, an electrode group and an electrolyte, the electrode group and the electrolyte being sealed in the battery case, the electrode group comprising a positive electrode, a separator, and a negative electrode, **characterized in that** the positive electrode is a positive electrode according to claim 9.

## Patentansprüche

1. Kathodenaktivmaterial mit einer Spinellstruktur, **dadurch gekennzeichnet, dass** das Kathodenaktivmaterial Partikel einer lithiumhaltigen Verbindung mit einer chemischen Formel LiNi_{0,5-x}Mn_{1,5-y}{A}ᵤO_{z} und ein erstes Metalloxid und ein zweites Metalloxid, welche die Oberfläche der Partikel der lithiumhaltigen Verbindung beschichten, umfasst, wobei das erste Metalloxid ausgewählt ist aus einem oder mehreren von TiO₂, ZrO₂, SnO₂, SiO₂, GeO₂, CeO₂, HfO₂ und Nb₂O₅ und die Oberfläche der Partikel der lithiumhaltigen Verbindung in einer Inselform teilweise bedeckt und das zweite Metalloxid ausgewählt ist aus einem oder mehreren von Al₂O₃, MgO, ZnO, Ce₂O₃ und CaO und die Teilfläche der Partikel der lithiumhaltigen Verbindung, die nicht von dem ersten Metalloxid bedeckt ist, bedeckt; wobei {A} eine Dotierzusammensetzung ist, die durch eine Formel ΣwᵢBᵢ dargestellt wird, wobei Bᵢ ein Dotierelement zum Ersetzen von Ni und/oder Mn ist, wᵢ der Atomprozentanteil von Bᵢ in der gesamten Dotierzusammensetzung {A} ist und Σwᵢ = 1; und wobei u = x + y; 0 ≤ x ≤ 0,2; 0 ≤ y ≤ 0,2; 0 ≤ u ≤ 0,4; und 3,8 ≤ z ≤ 4,2.

2. Kathodenaktivmaterial nach Anspruch 1, **dadurch gekennzeichnet, dass** u > 0.

3. Kathodenaktivmaterial nach Anspruch 1, **dadurch gekennzeichnet, dass** Bᵢ ausgewählt ist aus einem oder mehreren der Gruppe bestehend aus Al, Mg, Fe, Co, Ti, Y, Sc, Ru, Cu, Mo, Ce, W, Zr, Ca und Sr.

4. Kathodenaktivmaterial nach einem der Ansprüche 1 bis 3, **dadurch gekennzeichnet, dass** die Partikel der lithiumhaltigen Verbindung eine Partikelgröße von 1-20 µm aufweisen; und das erste Metalloxid eine Partikelgröße von 10-500 nm aufweist.

5. Kathodenaktivmaterial nach einem der Ansprüche 1 bis 3, **dadurch gekennzeichnet, dass** die Abdeckung des ersten Metalloxids auf der Oberfläche der Partikel der lithiumhaltigen Verbindung 1-75 % beträgt.

6. Kathodenaktivmaterial nach einem der Ansprüche 1 bis 3, **dadurch gekennzeichnet, dass** in dem anderen Bereich auf der Oberfläche der Partikel der lithiumhaltigen Verbindung als demjenigen, der von dem ersten Metalloxid bedeckt ist, das zweite Metalloxid eine Dicke von 1-20 nm aufweist oder eine feste Lösung mit flachem Gradienten mit einer Tiefe von weniger als 200 nm ausgebildet ist.

7. Verfahren zur Herstellung eines Kathodenaktivmaterials nach einem der Ansprüche 1 bis 6, wobei das Verfahren **dadurch gekennzeichnet ist, dass** es folgende Schritte umfasst:
(1) einheitliches Mischen von Ausgangsverbindungen von Li, Ni, Mn und optional {A} und einer Ausgangsverbindung eines ersten Metalloxids in einem stöchiometrischen Verhältnis;
(2) aufeinanderfolgendes Sintern des Gemischs, das in Schritt (1) erhalten wird, bei einer Temperatur von 400-500 °C und dann bei einer Temperatur von 800-1000 °C und Abkühlen desselben, um eine lithiumhaltige Verbindung herzustellen, deren Oberfläche in einer Inselform von dem ersten Metalloxid bedeckt ist;
(3) Mischen der lithiumhaltigen Verbindung mit der Oberfläche, die in einer Inselform von dem ersten Metalloxid bedeckt ist, die in Schritt (2) hergestellt wird, mit einer Ausgangsverbindung eines zweiten Metalloxids;
(4) Sintern des Gemischs, das in Schritt (3) erhalten wird, bei einer Temperatur von 400-800 °C und Abkühlen desselben, um das Kathodenaktivmaterial herzustellen.

8. Herstellungsverfahren nach Anspruch 7, **dadurch gekennzeichnet, dass** das Mischen in Schritt (1) ein Trockenmischen ist und das Mischen in Schritt (3) ein Nassmischen ist.

9. Positive Elektrode für eine Lithium-Ionen-Batterie, **dadurch gekennzeichnet, dass** die positive Elektrode einen Stromableiter und ein Kathodenaktivmaterial, einen leitfähigen Zusatzstoff aus Kohlenstoffmaterial und ein Bindemittel, das auf den Stromableiter aufgebracht ist, umfasst, **dadurch gekennzeichnet, dass** das Kathodenaktivmaterial ein Kathodenaktivmaterial nach einem der Ansprüche 1 bis 6 ist.

10. Lithium-Ionen-Batterie, wobei die Batterie **dadurch gekennzeichnet ist, dass** sie ein Batteriegehäuse, eine Elektrodengruppe und einen Elektrolyten umfasst, wobei die Elektrodengruppe und der Elektrolyt dicht in dem Batteriegehäuse eingeschlossen sind, und die Elektrodengruppe eine positive Elektrode, einen Separator und eine negative Elektrode umfasst, **dadurch gekennzeichnet, dass** die positive Elektrode eine positive Elektrode nach Anspruch 9 ist.

## Revendications

1. Matériau actif de cathode ayant une structure de spinelle, **caractérisé en ce que**, le matériau actif de cathode comprend des particules d'un composé contenant du lithium ayant une formule chimique LiNi_{0,5-x}Mn_{1,5-y}{A}ᵤO_{z} et un premier oxyde métallique et un second oxyde métallique recouvrant la surface des particules du composé contenant du lithium, dans lequel le premier oxyde métallique est sélectionné parmi un ou plusieurs parmi TiO₂, ZrO₂, SnO₂, SiO₂, GeO₂, CeO₂, HfO₂, et Nb₂O₅, et recouvre partiellement la surface des particules du composé contenant du lithium sous une forme d'îlot, le second oxyde métallique est sélectionné parmi un ou plusieurs parmi Al₂O₃, MgO, ZnO, Ce₂O₃, et CaO, et recouvre la surface partielle des particules du composé contenant du lithium qui n'est pas recouverte par le premier oxyde métallique ; dans lequel {A} est une composition de dopage représentée par une formule ΣwᵢBᵢ, dans laquelle Bᵢ est un élément de dopage pour remplacer Ni et/ou Mn, wᵢ est le pourcentage atomique de Bᵢ dans la composition de dopage {A} entière, et Σwᵢ = 1 ; et dans laquelle u = x + y ; 0 ≤ x ≤ 0,2 ; 0 ≤ y ≤ 0,2 ; 0 ≤ u ≤ 0,4 ; et 3,8 ≤ z ≤ 4,2.

2. Matériau actif de cathode selon la revendication 1, **caractérisé en ce que** u > 0.

3. Matériau actif de cathode selon la revendication 1, **caractérisé en ce que** Bᵢ est sélectionné parmi un ou plusieurs du groupe consistant en Al, Mg, Fe, Co, Ti, Y, Sc, Ru, Cu, Mo, Ce, W, Zr, Ca et Sr.

4. Matériau actif de cathode selon l'une quelconque des revendications 1 à 3, **caractérisé en ce que** les particules du composé contenant du lithium ont une taille particulaire de 1 à 20 µm ; et le premier oxyde métallique a une taille particulaire de 10 à 500 nm.

5. Matériau actif de cathode selon l'une quelconque des revendications 1 à 3, **caractérisé en ce que** la couverture du premier oxyde métallique sur la surface des particules du composé contenant du lithium est de 1 à 75 %.

6. Matériau actif de cathode selon l'une quelconque des revendications 1 à 3, **caractérisé en ce que**, dans l'autre zone de la surface des particules du composé contenant du lithium que celle qui est recouverte par le premier oxyde métallique, le second oxyde métallique a une épaisseur de 1 à 20 nm ou une solution solide à gradient peu profond avec une profondeur inférieure à 200 nm est formée.

7. Procédé de préparation d'un matériau actif de cathode selon l'une quelconque des revendications 1 à 6, le procédé étant **caractérisé en ce qu'**il comprend les étapes suivantes :
(1) le mélange de composés sources de Li, Ni, Mn et facultativement {A} et d'un composé source d'un premier oxyde métallique uniformément dans un rapport stœchiométrique ;
(2) le frittage du mélange obtenu dans l'étape (1) de manière séquentielle à une température de 400 à 500 °C et ensuite à une température de 800 à 1000 °C et le refroidissement de celui-ci pour préparer un composé contenant du lithium avec la surface recouverte par le premier oxyde métallique sous une forme d'îlot ;
(3) le mélange du composé contenant du lithium avec la surface recouverte par le premier oxyde métallique sous une forme d'îlot préparé dans l'étape (2) avec un composé source d'un second oxyde métallique ;
(4) le frittage du mélange obtenu dans l'étape (3) à une température de 400 à 800 °C et le refroidissement de celui-ci pour préparer le matériau actif de cathode.

8. Procédé de préparation selon la revendication 7, **caractérisé en ce que** le mélange dans l'étape (1) est un mélange à sec, et le mélange dans l'étape (3) est un mélange humide.

9. Électrode positive pour une batterie au lithium-ion, **caractérisée en ce que** l'électrode positive comprend un collecteur de courant, et un matériau actif de cathode, un additif conducteur de type matériau de carbone et un liant chargés sur le collecteur de courant, **caractérisée en ce que** le matériau actif de cathode est un matériau actif de cathode selon l'une quelconque des revendications 1 à 6.

10. Batterie au lithium-ion, la batterie étant **caractérisée en ce qu'**elle comprend un boîtier de batterie, un groupe d'électrodes et un électrolyte, le groupe d'électrodes et l'électrolyte étant scellés dans le boîtier de batterie, le groupe d'électrodes comprenant une électrode positive, un séparateur, et une électrode négative, **caractérisée en ce que** l'électrode positive est une électrode positive selon la revendication 9.
